# EUROPEAN PATENT APPLICATION

(11) **EP 4 730 092 A1**
(43) Date of publication of application: **22.04.2026**
(21) Application number: 24822620.1
(22) Date of filing: 05.06.2024
(51) Int. Cl.: G06F 3/0483

(54) **INTERACTION METHOD AND APPARATUS, ELECTRONIC DEVICE, AND STORAGE MEDIUM**

(30) Priority: 16.06.2023 CN 202310721249
(71) Applicant: Beijing Youzhuju Network Technology Co., Ltd., Beijing 101299 (CN)
(72) Inventor: WANG, Li, Beijing 100028 (CN); XIE, Zhiyao, Beijing 100028 (CN); ZHAO, Mengjie, Beijing 100028 (CN); DONG, Shihan, Beijing 100028 (CN)
(74) Representative: Marks & Clerk LLP
(86) International application number: PCT/CN2024/097623
(87) International publication number: WO 2024/255669

(57) **Abstract**

The present disclosure relates to an interaction method and apparatus, an electronic device, and a storage medium. The method includes: displaying a feed page, where the feed page corresponds to an object to be displayed; displaying interaction invitation information on the feed page when page association information of the feed page meets a preset trigger condition, where the interaction invitation information is used to invite users to perform a preset processing operation on the object to be displayed; and the preset processing operation is an operation used for reflecting interest in the object to be displayed; and displaying interaction participation information on the feed page in response to a trigger operation on the interaction invitation information, where the interaction participation information is operation result feedback information for the preset processing operation performed on the object to be displayed.

## Description

### CROSS-REFERENCE TO RELATED APPLICATION(S)

The present application claims priority to Chinese Patent Application No. 202310721249.0, filed on June 16, 2023 and entitled "INTERACTION METHOD AND APPARATUS, ELECTRONIC DEVICE, AND STORAGE MEDIUM", which is incorporated herein by reference in its entirety.

### FIELD

The present disclosure relates to the field of human-computer interaction technologies, and in particular, to an interaction method and apparatus, an electronic device, and a storage medium.

### BACKGROUND

With the continuous development of technologies related to e-commerce applications (APPs), people's requirements for functions related to e-commerce APPs have become increasingly diverse, especially in aspects such as information display methods and interaction methods that are closely related to people's user experience.

Therefore, how to meet users' diverse functional requirements for e-commerce APPs to improve user experience is a technical problem that needs to be solved urgently.

### SUMMARY

To solve or at least partially solve the technical problem mentioned above, the present disclosure provides an interaction method and apparatus, an electronic device, and a storage medium.

According to a first aspect, the present disclosure provides an interaction method. The method includes:
displaying a feed page, where the feed page corresponds to an object to be displayed;
displaying interaction invitation information in the feed page when page association information of the feed page meets a preset trigger condition, where the interaction invitation information is used to invite users to perform a preset processing operation on the object to be displayed; and the preset processing operation is an operation used for reflecting interest in the object to be displayed; and
displaying interaction participation information on the feed page in response to a trigger operation on the interaction invitation information, where the interaction participation information is operation result feedback information for the preset processing operation performed on the object to be displayed.

According to a second aspect, the present disclosure further provides an interaction apparatus. The apparatus includes:
a first display module configured to display a feed page, where the feed page corresponds to an object to be displayed;
a second display module configured to display interaction invitation information on the feed page when page association information of the feed page meets a preset trigger condition, where the interaction invitation information is used to invite users to perform a preset processing operation on the object to be displayed; and the preset processing operation is an operation used for reflecting interest in the object to be displayed; and
a third display module configured to display interaction participation information on the feed page in response to a trigger operation on the interaction invitation information, where the interaction participation information is operation result feedback information for the preset processing operation performed on the object to be displayed.

According to a third aspect, the present disclosure further provides an electronic device. The electronic device includes:
one or more processors; and
a storage apparatus configured to store one or more programs, where
the one or more programs, when executed by the one or more processors, cause the one or more processors to implement the interaction method described above.

According to a fourth aspect, the present disclosure further provides a computer-readable storage medium having a computer program stored thereon, where the program, when executed by a processor, causes the interaction method described above to be implemented.

### BRIEF DESCRIPTION OF THE DRAWINGS

The accompanying drawings herein, which are incorporated into and form a part of the description, illustrate the embodiments in line with the present disclosure and are used in conjunction with the description to explain the principles of the present disclosure.

In order to more clearly illustrate the technical solutions in the embodiments of the present disclosure or in the prior art, the accompanying drawings for describing the embodiments or the prior art will be briefly described below. Apparently, those of ordinary skill in the art may still derive other drawings from these accompanying drawings without creative efforts.
FIG. 1 is a flowchart of an interaction method according to an embodiment of the present disclosure;
FIG. 2 to FIG. 13 are schematic diagrams of several feed pages according to embodiments of the present disclosure;
FIG. 14 is a schematic structural diagram of an interaction apparatus according to an embodiment of the present disclosure; and
FIG. 15 is a schematic structural diagram of an electronic device according to an embodiment of the present disclosure.

### DETAILED DESCRIPTION OF EMBODIMENTS

For a clearer understanding of the above-mentioned objectives, features and advantages of the present disclosure, the solutions of the present disclosure will be further described below. It should be noted that the embodiments of the present disclosure and features in the embodiments may be combined with each other without conflict.

Many specific details are set forth in the following description to facilitate a full understanding of the present disclosure. However, the present disclosure may also be implemented in other ways different from those described herein. Apparently, the embodiments in the description are only some rather than all of the embodiments of the present disclosure.

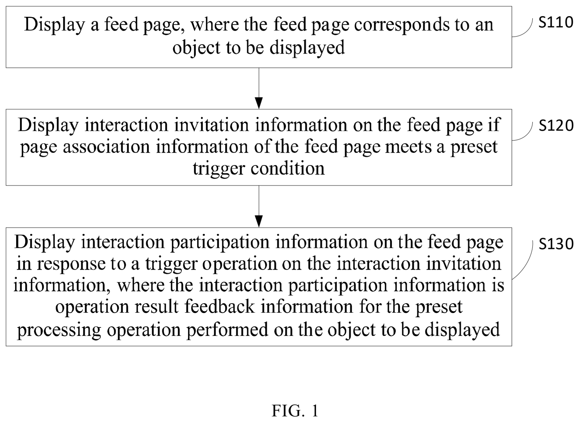

FIG. 1 is a flowchart of an interaction method according to an embodiment of the present disclosure. The method may be performed by an interaction apparatus. The apparatus may be implemented in the form of software and/or hardware. The apparatus may configured in an electronic device, for example, a terminal, specifically including, but not limited to, a smartphone, a palmtop computer, a tablet computer, a wearable device with a display screen, a desktop computer, a notebook computer, an all-in-one machine, a smart home device, etc.

As shown in FIG. 1, the method may specifically include the following steps.

S110: A feed page is displayed, where the feed page corresponds to an object to be displayed.

The object to be displayed may be, for example, an object to be shared with users. The object to be displayed may be a product. Further, the object to be displayed may include an item, a service, etc.

The feed page may be, for example, a page that introduces the object to be displayed that corresponds to the feed page. In an embodiment, the feed page is a live streaming display page. The live streaming display page may be, for example, a live streaming page displayed after entering a live streaming room that is currently live. In the live streaming display page, a streamer introduces the object to be displayed to viewers via live streaming. The object to be displayed that corresponds to the feed page may be, for example, a product that the streamer shares with (or sells to) users through the feed page.

It should be noted that in an e-commerce scenario, before and during the execution of this step, the streamer may have already demonstrated the object to be displayed, or may have not demonstrated the object to be displayed, or may be demonstrating the object to be displayed. If the streamer has not demonstrated the object to be displayed before and during the execution of this step, the object to be displayed may be a product that has not yet been listed for sale.

S120: Interaction invitation information on the feed page is displayed when page association information of the feed page meets a preset trigger condition.

The page association information may be, for example, information associated with the content displayed on the feed page. In an e-commerce scenario, if the feed page is a live streaming room display page, the page association information may be information associated with a live streaming room. Further, the page association information may be information associated with a live streaming room account and/or products for sale in the live streaming room. For example, the page association information may include an account level of the live streaming room account, a follower count of the live streaming room, product sales per unit time in the live streaming room, and a like count for the current live stream in the live streaming room.

The preset trigger condition may be, for example, a preset determination condition used for determining whether to display the interaction invitation information on the feed page. The preset trigger condition may be set based on the specific content included in the page association information. For example, if the page association information includes the account level of the live streaming room account, the preset trigger condition includes an account level of the live streaming room account reaching 30. If the page association information includes the product sales per unit time in the live streaming room, the preset trigger condition includes the product sales per unit time in the live streaming room reaching 1000.

An interaction invitation may be, for example, used to invite users to interactively express their preference or interest in one or more objects to be displayed that correspond to the feed page. The interaction invitation information may be, for example, information used for describing the content of the interaction invitation. Optionally, the interaction invitation information is used to invite users to perform a preset processing operation on the object to be displayed. The preset processing operation is operation information used for expressing interest in the object to be displayed. For example, the preset processing operation includes a voting operation and a non-voting operation. The voting operation may specifically include voting on prioritizing the demonstration of an object to be displayed or voting on prioritizing the listing of an object to be displayed. The non-voting operation may specifically include a listing request operation, a demonstration request operation, or a restocking request operation.

It should be noted that the voting operation usually involves two or more objects to be displayed, the purpose of the operation includes comparison, competition, and the concept of PK, and the subsequent focus will be on the competition result between the two or more objects to be displayed.

The non-voting operation may involve only one object to be displayed or may involve two or more objects to be displayed, the purpose of the operation does not include comparison, competition, and the concept of PK, and the subsequent focus will not be on the competition result between the two or more objects to be displayed.

In a live streaming scenario, an interaction invitation may be sent by a streamer or automatically generated by a client.

The interaction invitation being sent by the streamer means that a streamer client is configured with a function allowing the streamer to send the interaction invitation to users. The interaction invitation function is used to invite users to perform a processing operation on one or more objects to be displayed to express whether they are interested in one or more objects to be displayed. For example, if the streamer intends to know if users expects the listing of product 5, the streamer may use the interaction invitation function to send a listing request invitation for product 5 to viewers. On a viewer client, the "listing request invitation for product A" will be displayed on the live streaming room display page (i.e., the feed page) in the form of interaction invitation information.

The interaction invitation being automatically generated by the client means that the viewer client automatically generates the interaction invitation based on live stream related information (such as a number of comments from all viewers on an object to be displayed, or a historical transaction volume of an object to be displayed). The interaction invitation is displayed on a live streaming room display page (i.e., the feed page) of the viewer client in the form of interaction invitation information.

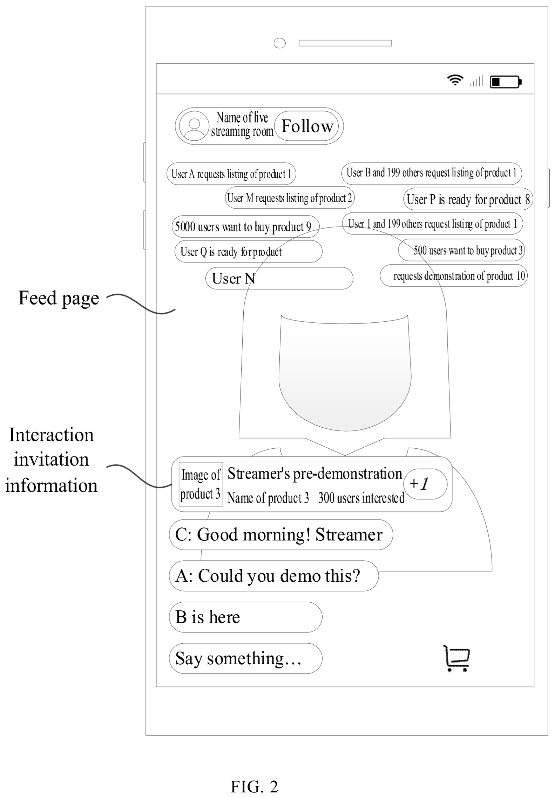

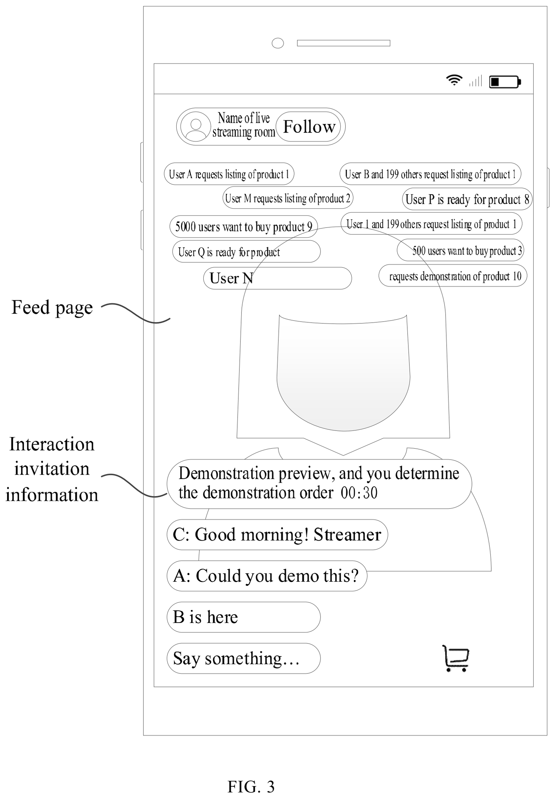

In some embodiments, the interaction invitation information may include or may not include identification information of the object to be displayed. The identification information of the object to be displayed is information used for distinguishing one object to be displayed from other objects to be displayed. For example, the identification information of the object to be displayed includes an image and/or a name of the object to be displayed. In FIG. 2 and FIG. 3, the feed page is a live streaming room display page where interaction invitation information is displayed. In FIG. 2, the interaction invitation information includes the identification information of the object to be displayed (i.e., an image and a name of product 3). In FIG. 3, the interaction invitation information does not include the identification information of the object to be displayed.

If the interaction invitation information includes the identification information of the object to be displayed, it means that the interaction invitation information defines an object to be processed. For example, in FIG. 2, the object to be processed is product 3. The interaction invitation information is used to invite users to interactively express their preference or interest in the defined object to be processed.

If the interaction invitation information does not include the identification information of the object to be displayed, it means that interaction invitation information does not define the object to be processed, and users may freely select one or more objects to be displayed from all objects to be displayed that correspond to the feed page as the object to be processed. The interaction invitation information is used to invite users to freely select the object to be processed and interactively express their preference or interest in the selected object to be processed.

S130: Interaction participation information on the feed page is displayed in response to a trigger operation on the interaction invitation information, where the interaction participation information is operation result feedback information for the preset processing operation performed on the object to be displayed.

The trigger operation on the interaction invitation information may be, for example, an operation used for expressing acceptance of the invitation to the client. For example, the trigger operation on the interaction invitation information may include a tap operation or a swipe operation on the interaction invitation information. The trigger operation on the interaction invitation information may further include a tap operation or a swipe operation on a specified control, option, or area in the interaction invitation information.

The interaction participation information may be, for example, operation result feedback information for the preset processing operation performed on the object to be displayed.

Optionally, the feed page further includes a comment summary area and a live comment area, where the comment summary area and the live comment area are vertically arranged, with the live comment area being located above the comment summary area; the interaction invitation information is between the comment summary area and the live comment area; and a display position of the interaction participation information is in at least one of the following positions: being within the live comment area, and being between the comment summary area and the live comment area. The comment summary area is used to display comments from all viewers, entry information, and summary information of an object to be demonstrated that is being demonstrated. The object to be demonstrated that is being demonstrated may be, for example, a product being demonstrated by the streamer. The live comment area is a pre-specified area, which is near the top of the feed page and vertically arranged with the comment summary area.

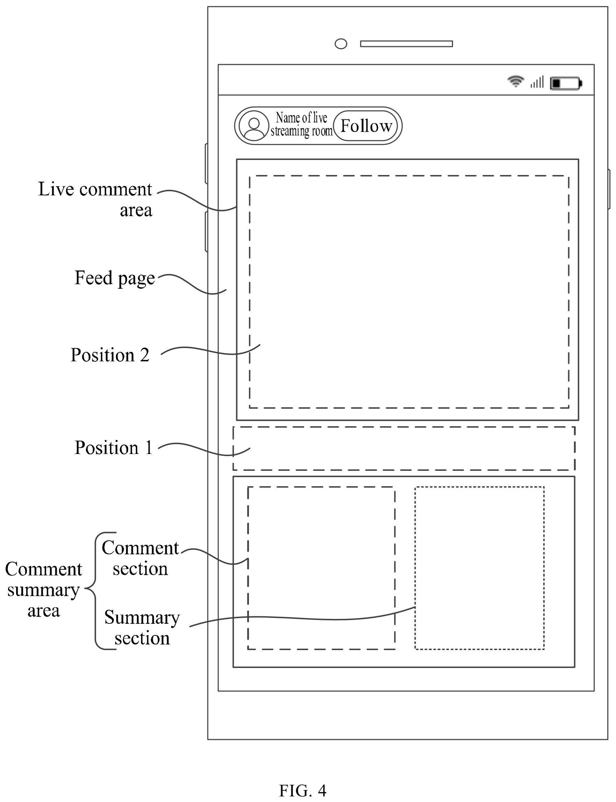

FIG. 4 is a schematic diagram of a feed page according to an embodiment of the present disclosure. The feed page is a live streaming room display page. In FIG. 4, there are two positions: position 1 and position 2. Position 1 is between the comment summary area and the live comment area. Position 2 is within the live comment area. The display position of the interaction invitation information is at position 1; and the display position of the interaction participation information is at position 1 and/or position 2.

Further, the comment summary area includes a comment section and a summary section. The comment section is used to display comments from all viewers, entry information, etc. The summary section is used to display summary information for the object to be demonstrated that is being demonstrated. The comment section and the summary section are horizontally arranged. The comment section is located on the left side of the summary section, and the display position of the interaction invitation information is above and adjacent to the comment section. If the display position of the interaction participation information is between the comment summary area and the live comment area. Optionally, the display position of the interaction participation information is above and adjacent to the comment section.

Optionally, information displayed at position 1 is set to be private information, i.e., the information displayed in position 1 is information only for this terminal user to view. The information displayed in position 1 is used to help users understand whether their operations (e.g., a preset processing operation performed on the object to be displayed) are successful or used to provide reminders for important matters. The information displayed in position 2 is shared information, i.e., the information displayed in position 2 may be displayed on all terminals of all viewers, regardless of whether users are using the terminals. The information displayed in position 2 is used to create a joyous and lively atmosphere.

In an embodiment, the feed page corresponds to at least one object to be displayed; the at least one object to be displayed includes a target object to be displayed; the interaction invitation information includes identification information of the target object to be displayed and a participation option; and S130 includes: displaying the interaction participation information on the feed page in response to a selection operation on the participation option, where the interaction participation information includes the identification information of the target object to be displayed.

The target object to be displayed is pre-specified. For example, the interaction invitation is sent by the streamer, and the target object to be displayed is specified by the streamer. Alternatively, the interaction invitation is automatically generated by the client, and the target object to be displayed is determined based on the live stream related information. The live stream related information may be, for example, information formed during a live streaming process. If during the live streaming process, a discussion count from all viewers for an object to be displayed exceeds a set count threshold, the object to be displayed is determined as the target object to be displayed. The participation option is a control configured to help users to quickly perform a preset processing operation on the object to be displayed. The selection operation on the participation option may be a tap selection or a swipe operation on the participation option. A user performing the selection operation on the participation option means that the user wants to perform preset processing on the target object to be displayed based on the content of the interaction invitation information, i.e., the user accepts the interaction invitation.

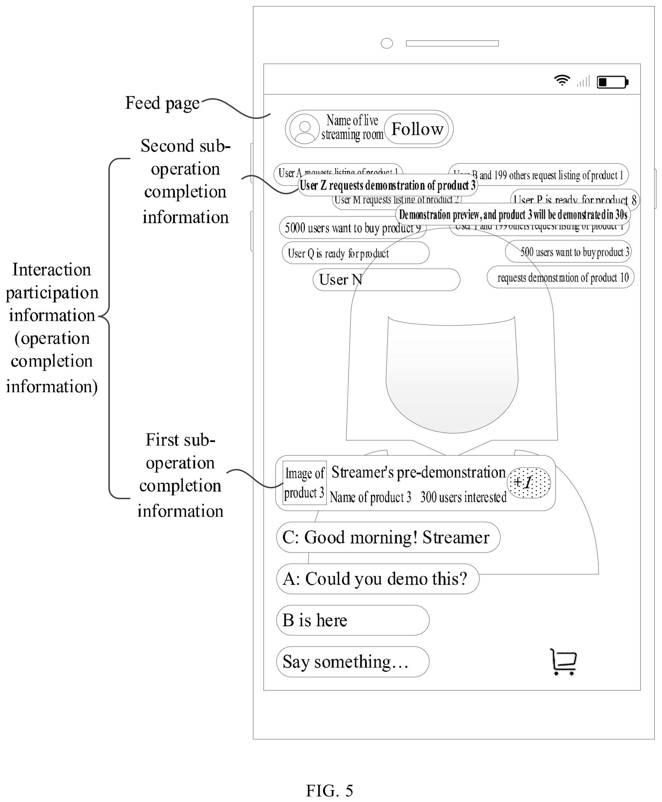

For example, it is assumed that user Z is a viewer. The feed pages in FIG. 2 and FIG. 5 are pages displayed by a terminal of user Z. Referring to FIG. 2, the interaction invitation information on the feed page includes identification information of product 3 (i.e., an image and a name of product 3), and the interaction invitation information is used to invite users to express their interest in the demonstration of product 3. The "+1" control in FIG. 2 is the participation option. If the user taps the "+1" control in the interaction invitation information in FIG. 2, referring to FIG. 5, interaction participation information is displayed on the feed page. The interaction participation information includes identification information of product 3.

It should be noted that in practice, there are a plurality of specific expressions used for expressing an option as a participation option, and "+1 " is only one of the expressions. In other embodiments, it may also be expressed as "like", "reserve", "book", etc.

Further, it is regarded that the preset processing operation includes a non-voting operation and a voting operation. In practice, interaction solutions may be set for each of the two types of operations. Specific solutions are provided below as examples for each of the two cases.

### Case 1: The preset processing operation is a non-voting operation

Optionally, if the interaction participation information includes operation completion information, states of the participation option include a selectable state and a non-selectable state; and in the interaction invitation information, a state of the participation option is a selectable state; or the interaction participation information includes operation completion information, where the operation completion information is used to prompt that the preset processing operation on the object to be displayed has been performed successfully; and the operation completion information includes first sub-operation completion information and/or second sub-operation completion information, where a display position of the first sub-operation completion information is between a comment summary area and a live comment area, and the first sub-operation completion information includes the participation option in a non-selectable state; and the second sub-operation completion information is displayed in the live comment area in the form of live comments.

The operation completion information is used to express that the user accepts the invitation and that the preset processing operation on the object to be displayed has been performed successfully. The state of the participation option being a selectable state means that the participation option may be triggered. The state of the participation option being a non-selectable state means that the participation option cannot be triggered. The first sub-operation completion information and the second sub-operation completion information have the same effect, but different display positions and expressions.

For example, in FIG. 2, the "+1 " control in the interaction invitation information (i.e., the participation option) is in a selectable state. In FIG. 5, the "+1 " control of the first sub-operation completion information (i.e., the participation option) is in a non-selectable state, being in a grayed-out state. By setting the states of the two "+1 " controls (i.e., the participation options) in FIG. 2 and FIG. 5 to be different, it may clearly express that the user has performed a demonstration request operation on product 3. By comparing FIG. 4 and FIG. 5, the second sub-operation completion information displays "User Z requests demonstration of product 3" in the live comment area in the form of live comments. The second sub-operation completion information may be used to clearly express that user Z has performed a demonstration request operation on product 3.

In the above-mentioned embodiments, the reason for setting two types of operation completion information, namely the first sub-operation completion information and the second sub-operation completion information, is that the audience for each type of operation completion information is different. Specifically, it is assumed that user Z and user Y view the same live stream simultaneously through their respective terminals. The feed page in the terminal of user Z includes interaction invitation information, and after user Z taps the participation option in the interaction invitation information, the first sub-operation completion information is displayed only in the terminal of user Z but not in the terminal of user Y, to notify user Z that the tap operation on the participation option in the interaction invitation information has taken effect. The second sub-operation completion information is displayed both in the terminal of user Z and in the terminal of user Y, to create an interaction atmosphere.

### Case 2: The preset processing operation is a voting operation

Optionally, the interaction invitation information includes identification information of at least two target objects to be displayed and participation options for the target objects to be displayed, where in the interaction invitation information, a state of each of the participation options is a selectable state; or the interaction participation information includes operation completion information, where the operation completion information is used to prompt that the preset processing operation on the object to be displayed has been performed successfully; and the operation completion information includes first sub-operation completion information and/or second sub-operation completion information, where a display position of the first sub-operation completion information is between a comment summary area and a live comment area, and the first sub-operation completion information includes voting result information up to a current moment; and the second sub-operation completion information is displayed in the live comment area in the form of live comments. Further, the display position of the first sub-operation completion information is above and adjacent to the comment section.

Similarly, the operation completion information is used to express that the user accepts the request and that the preset processing operation on the object to be displayed has been performed successfully. The state of the participation option being a selectable state means that the participation option may be triggered. The first sub-operation completion information and the second sub-operation completion information have the same effect, but different display positions and expressions.

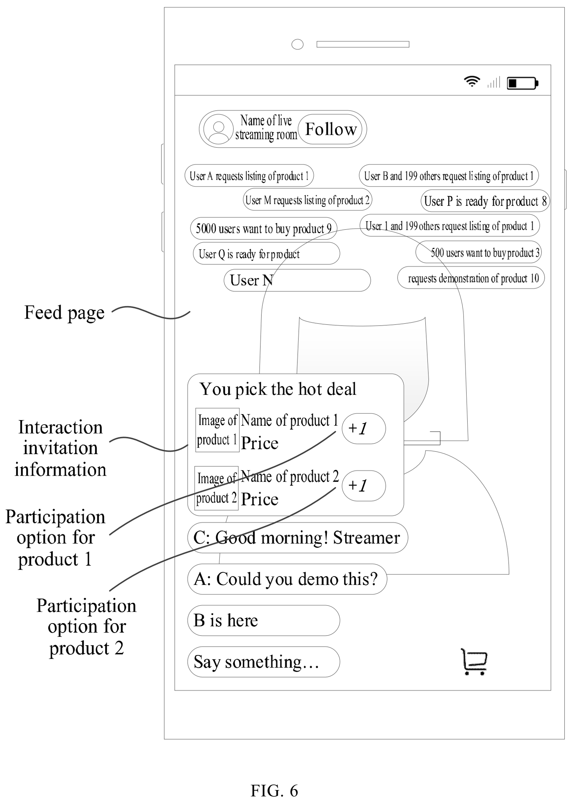

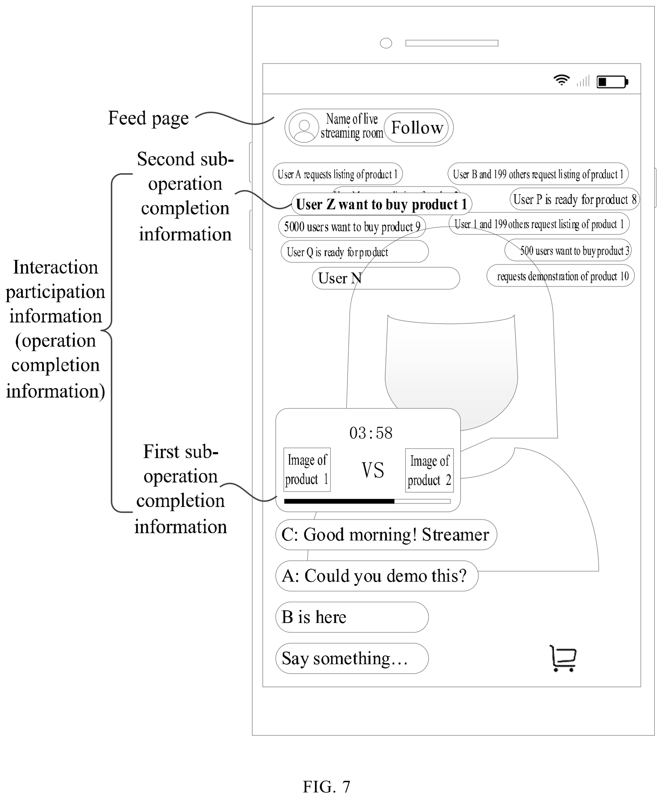

For example, in FIG. 6, the interaction invitation information includes identification information of two target objects to be displayed. The two target objects to be displayed are product 1 and product 2. Each target object to be displayed has a corresponding participation option (i.e., the "+1 " control). Moreover, in the interaction invitation information, a state of each participation option is a selectable state. It is assumed that user Z taps the participation option (i.e., the "+1 " control) for product 1. Referring to FIG. 7, the operation completion information includes the first sub-operation completion information and the second sub-operation completion information. The first sub-operation completion information is between the comment summary area and the live comment area, displaying the voting status for product 1 and product 2 in the form of a PK progress bar. Since the first sub-operation completion information and the interaction invitation information include different content, the first sub-operation completion information may clearly express that the selection operation of the user on the participation option is successful. Moreover, through the first sub-operation completion information, the user may also understand the voting statue for each target object to be displayed up to the current moment. By comparing FIG. 4 and FIG. 7, the second sub-operation completion information displays "User Z wants to buy product 1" in the live comment area in the form of live comments. The second sub-operation completion information may be used to clearly express that user Z has performed a listing request operation on product 1.

In another embodiment, the feed page corresponds to at least one object to be displayed; and if the interaction invitation information does not include identification information of any of the at least one object to be displayed, S130 may include: displaying an object aggregation display page in response to the trigger operation on the interaction invitation information, where the object aggregation display page includes summary information of all objects to be displayed that correspond to the feed page; and displaying the interaction participation information on the feed page in response to a selection operation on one of the objects to be displayed, where the interaction participation information includes identification information of a target object to be displayed, and the target object to be displayed is the selected object to be displayed.

The object to be displayed includes a plurality of types of attributes. The attributes of the object to be displayed may be, for example, inherent characteristics due to the construction, composition, etc. of the object to be displayed. If the object to be displayed is an item, the attributes of the object to be displayed include the name, brand, category, style, size, material, function, trademark, type, price, color, and packaging of the object to be displayed. If the object to be displayed is a service, its attributes are the content, brand, category, precaution, and price included by the object. Attribute information of the object to be displayed may be, for example, information used for describing the attributes of the object to be displayed.

The summary information of the object to be displayed may be, for example, a set formed by partial attribute information of the object to be displayed. The summary information of the object to be displayed is used to briefly display the user with an overview of the object to be displayed in the form of text and/or images. In an e-commerce scenario, the summary information of the object to be displayed may be understood as a product card in a product list.

The object aggregation display page may be, for example, a page used for aggregating the summary information of the object to be displayed that corresponds to the feed page. Optionally, the object aggregation display page may an object display list. On the object aggregation display page, the summary information of each object to be displayed may be displayed in the form of a card. The summary information of one object to be displayed is displayed in one card. In an e-commerce scenario, an object display page may be a product list.

A selection operation on one object to be displayed may be, for example, an operation used to express that the object to be displayed is used as an object to be processed. For example, the selection operation on one object to be displayed may be specifically a tap operation on a specified area or control in a product card of the object to be displayed.

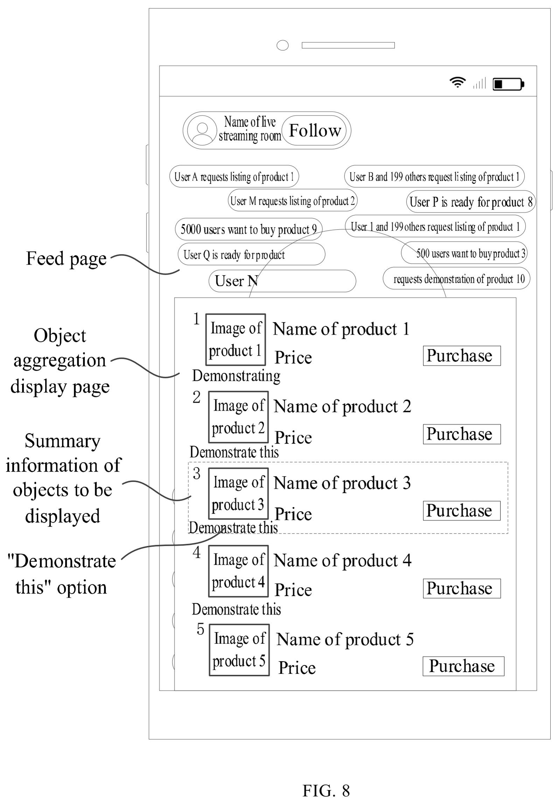

For example, referring to FIG. 3, the interaction invitation information on the feed page does not include identification information of products. If the user taps the interaction invitation information in FIG. 3, referring to FIG. 8, a product list (i.e., an object aggregation display page) corresponding to the live streaming room is displayed. The product list includes product cards for all products corresponding to the live streaming room (i.e., summary information of the objects to be displayed). If the user taps the "Demonstrate this" option for object 3 to be displayed in FIG. 8 as a selection operation on object 3 to be displayed, the interaction participation information is displayed on the feed page. The interaction participation information includes identification information of object 3 to be displayed. For example, the interaction participation information includes operation completion information, where the operation completion information is used to prompt that the preset processing operation on the object to be displayed has been performed successfully; and the operation completion information is displayed in the live comment area in the form of live comments.

In each of the above-mentioned examples, the interaction participation information includes operation completion information. These are merely several specific examples provided in the present application. In practice, the interaction participation information includes state change information, where the state change information is used to prompt a state change of the target object to be displayed after preset processing is performed on the object to be displayed.

The state change information has an association relationship with the interaction participation information. Specifically, the preset processing operation is a factor affecting the state change information. In some scenarios, after the user accepts the interaction invitation, the streamer may view the acceptance status of the interaction invitation for all users, decide whether or when to list, demonstrate, or restock the target object to be displayed, and then perform operations on the streamer client to list, demonstrate, or restock the target object to be displayed. After the streamer performs operations on the streamer client to list, demonstrate, or restock the target object to be displayed, the state change information of the target object to be displayed is formed, and the state change information of the target object to be displayed is displayed on the feed page.

For example, if the preset processing is listing request processing for product 1, the state change information is information for describing the listing of product 1. If the preset processing is demonstration request processing for product 1, the state change information is information for describing that the demonstration of product 1 is about to begin. If the preset processing is to vote on which product, between product 1 and product 2, should be prioritized for demonstration, assuming that the final voting result is that product 1 receives more votes than product 2, the state change information is information for describing that the demonstration of product 1 is about to begin. If the preset processing is to vote on which product, between product 1 and product 2, should be prioritized for listing, assuming product 1 receives more votes than product 2, the state change information is information for describing that the listing of product 1. If the preset processing is a restocking request processing for product 1, the state change information is information for describing the restocking of product 1.

It should also be noted that in practice, the interaction participation information may include both operation completion information and state change information. Alternatively, the interaction participation information includes only operation completion information. Alternatively, the interaction participation information includes only state change information.

In the technical solutions described above, the interaction invitation information is displayed on the feed page if the page association information of the feed page meets the preset trigger condition, where the interaction invitation information is used to invite users to perform a preset processing operation on the object to be displayed. the preset processing operation is the operation used for reflecting interest in the object to be displayed; and the interaction participation information is displayed on the feed page in response to the trigger operation on the interaction invitation information, where the interaction participation information is the operation result feedback information for the preset processing operation performed on the object to be displayed. Its essence is to invite users to interact, which can not only create a lively atmosphere in the live streaming room, but also help the streamer to understand which objects to be displayed viewers are interested in and then to decide whether or when to list, demonstrate, or restock the objects to be displayed, thereby dynamically adjusting the live streaming process to improve the viewer experience.

On the basis of the technical solutions described above, optionally, the interaction participation information includes state change information, where the state change information includes first sub-state change information and/or second sub-state change information; a display position of the first sub-state change information is between a comment summary area and a live comment area; and a display position of the second sub-state change information is within the live comment area.

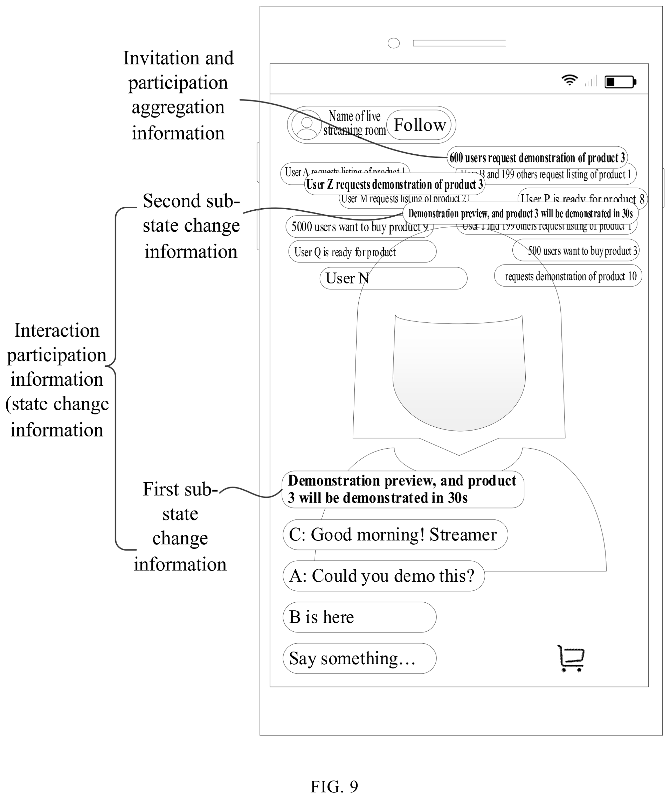

For example, still referring to FIG. 9, the second sub-state change information is displayed within the live comment area, which may help create an atmosphere. The first sub-state change information is displayed between the comment summary area and the live comment area, providing a strong reminder.

Further, the display position of the first sub-state change information is above and adjacent to the comment section.

On the basis of the technical solutions described above, optionally, if the state change information includes the first sub-state change information, the method further includes: displaying an object aggregation display page in response to a trigger operation on the first sub-state change information, where on the object aggregation display page, summary information of the target object to be displayed is located in a primary display position of the object aggregation display page.

The trigger operation on the first sub-state change information may specifically be a tap operation or a swipe operation on the first sub-state change information.

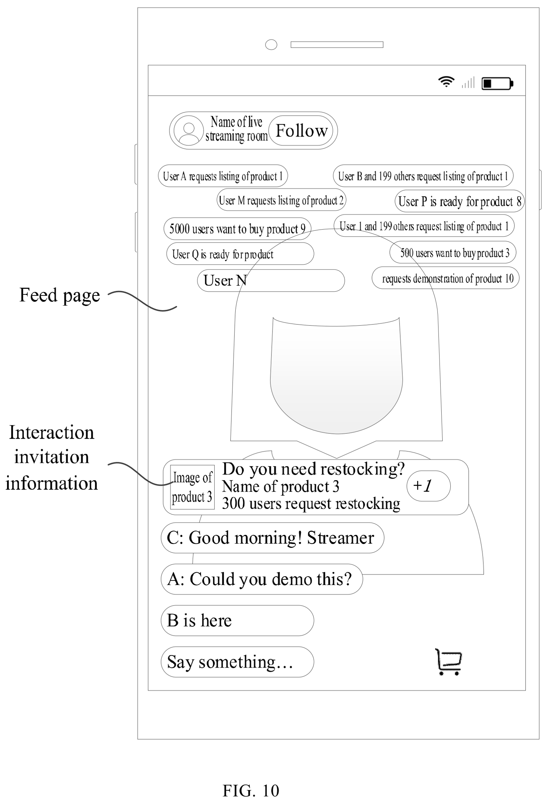

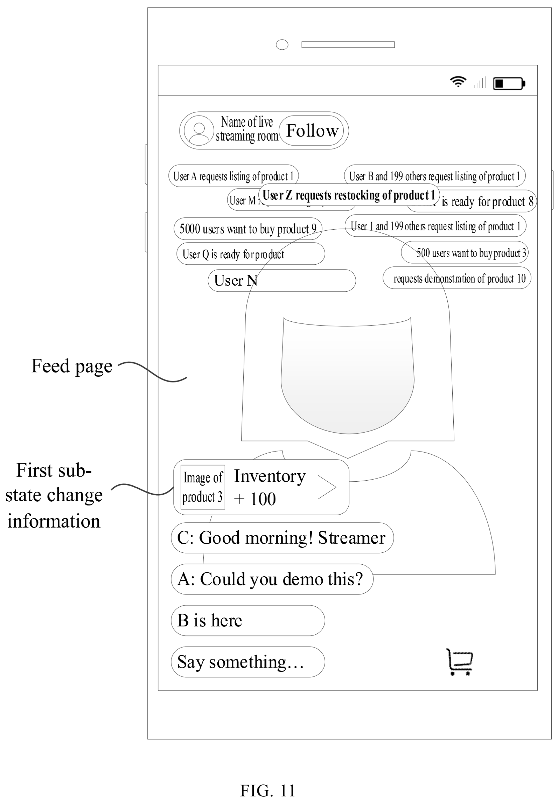

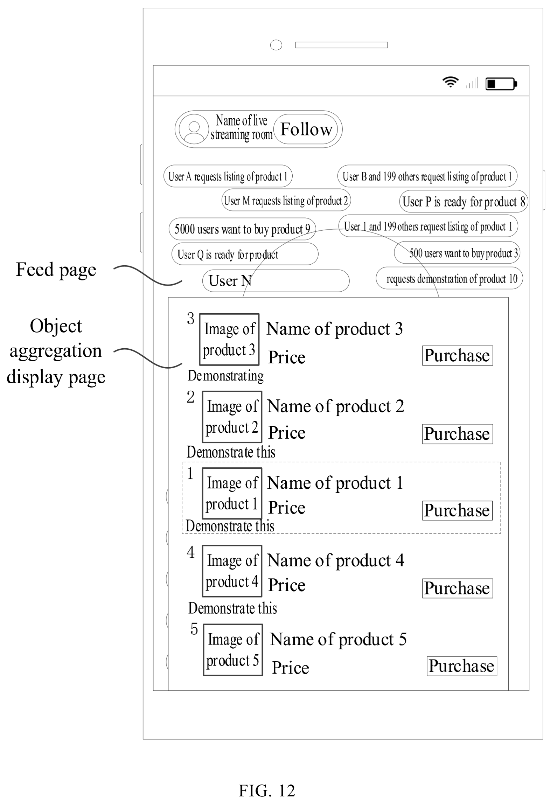

For example, referring to FIG. 10, the interaction invitation information on the feed page includes identification information of product 3 (i.e., an image and a name of product 3), and the interaction invitation information is used to invite users to express their interest in the restocking of product 3. If the user taps the "+1" control in the interaction invitation information in FIG. 10, referring to FIG. 11, the feed page includes first sub-state change information. The first sub-state change information indicates that the streamer has added 100 units of inventory for product 3. After the user taps the first sub-state change information, referring to FIG. 12, a product list (i.e., an object aggregation display page) is displayed on the feed page. The product list includes summary information of all products corresponding to the live streaming room. The summary information of product 3 is located in a primary display position of the object aggregation display page. Such a setting can help the user to find product 3 quickly.

On the basis of the technical solutions described above, optionally, the displaying interaction invitation information on the feed page includes: displaying the interaction invitation information and countdown information on the feed page; and after a countdown ends, displaying invitation and participation aggregation information on the feed page, where the invitation and participation aggregation information is used to prompt a number of users that perform the preset processing operation on the object to be displayed.

The countdown information is used to define a time period when the invitation can be accepted. For example, before the countdown ends, the interaction invitation is valid, allowing users to accept the invitation; and after the countdown ends, the interaction invitation is invalid, not allowing users to accept the invitation.

In practice, the interaction invitation is often not targeted at one viewer, but at some or all of the viewers. In other words, for the same interaction invitation, a plurality of viewers may accept the invitation. The invitation and participation aggregation information is used to describe the total acceptance status of the invitation by all viewers within the time period when the interaction invitation is valid. For example, it is used to describe how many users have accepted the interaction invitation.

For example, if the interaction invitation is demonstration request processing for product 3, referring to FIG. 9, the invitation and participation aggregation information describes that within the time period when the interaction invitation is valid, 600 users have performed a demonstration request operation on product 3.

It should be noted that if the interaction invitation information includes identification information of two or more objects to be displayed, a preset processing operation performed on some or all of the objects to be displayed defined in the interaction invitation information may be regarded as a trigger operation on the interaction invitation information.

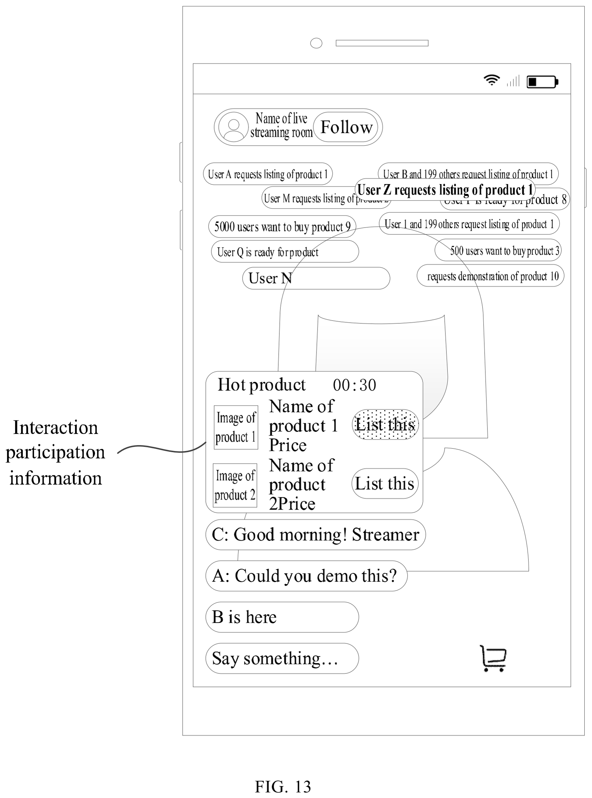

For example, referring to FIG. 6, the interaction invitation information includes identification information of product 1 and identification information of product 2. The preset processing operation defined in the interaction invitation information is a listing request operation. Regardless of whether the user taps the "+1" option corresponding to product 1, or the "+1" option corresponding to product 2, or both the "+1" option corresponding to product 1 and the "+1" option corresponding to product 2, it is all regarded as a trigger operation on interaction invitation information. For example, if the user only taps the "+1" option corresponding to product 1, referring to FIG. 13, in the interaction participation information, only the "+1" option corresponding to product 1 is in a grayed-out state.

It should be noted that the acquisition, storage, and application of user's personal information involved in the technical solutions of the embodiments of the present disclosure are all in compliance with relevant laws and regulations and do not violate public order and good morals.

It should be noted that for ease of description, the foregoing method embodiments are described as a series of action combinations. However, those skilled in the art should understand that the present invention is not limited to the order of actions described, because some steps may be performed in another order or simultaneously according to the present invention. Moreover, those skilled in the art should also understand that the embodiments described in this specification are all preferred embodiments, and the involved actions and modules are not necessarily required in the present invention.

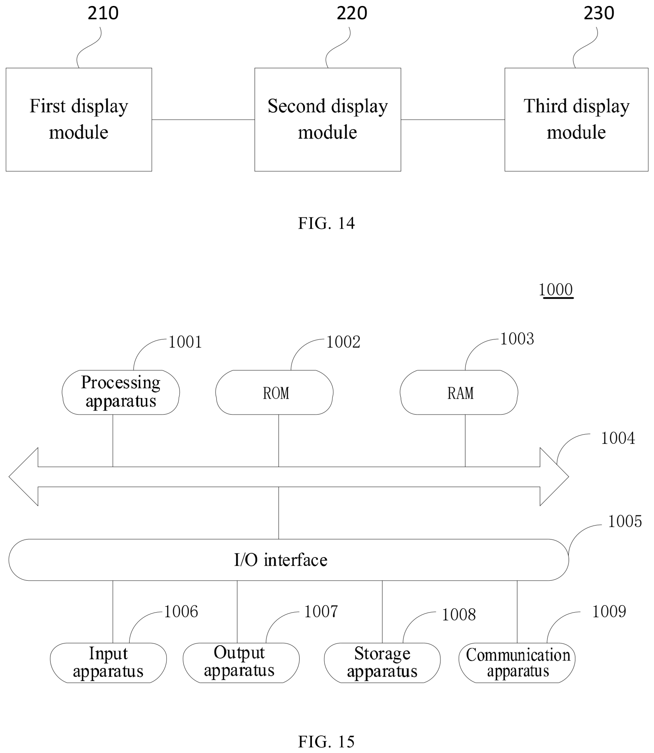

FIG. 14 is a schematic structural diagram of an interaction apparatus according to an embodiment of the present disclosure. The interaction apparatus provided in this embodiment of the present disclosure may be configured in a client. Referring to FIG. 14, the interaction apparatus includes:
a first display module 210 configured to display a feed page, where the feed page corresponds to an object to be displayed;
a second display module 220 configured to display interaction invitation information on the feed page when page association information of the feed page meets a preset trigger condition, where the interaction invitation information is used to invite users to perform a preset processing operation on the object to be displayed; and the preset processing operation is an operation used for reflecting interest in the object to be displayed; and
a third display module 230 configured to display interaction participation information on the feed page in response to a trigger operation on the interaction invitation information, where the interaction participation information is operation result feedback information for the preset processing operation performed on the object to be displayed.

Further, the feed page further includes a comment summary area and a live comment area, where the comment summary area and the live comment area are vertically arranged, with the live comment area being located above the comment summary area;
a display position of the interaction invitation information is between the comment summary area and the live comment area; and
a display position of the interaction participation information is at least one of the following positions: being within the live comment area, and being between the comment summary area and the live comment area.

Further, the feed page corresponds to at least one object to be displayed; the interaction invitation information does not include identification information of any of the at least one object to be displayed, and the third display module 230 is configured to:
display an object aggregation display page in response to the trigger operation on the interaction invitation information, where the object aggregation display page includes summary information of all objects to be displayed that correspond to the feed page; and
display the interaction participation information on the feed page in response to a selection operation on one of the objects to be displayed, where the interaction participation information includes identification information of a target object to be displayed, and the target object to be displayed is the selected object to be displayed.

Further, the feed page corresponds to at least one object to be displayed; the at least one object to be displayed includes a target object to be displayed; the interaction invitation information includes identification information of the target object to be displayed and a participation option; and
the third display module 230 is configured to:
display the interaction participation information on the feed page in response to a selection operation on the participation option, where the interaction participation information includes the identification information of the target object to be displayed.

Further, the interaction participation information includes operation completion information, and states of the participation option include a selectable state and a non-selectable state; and in the interaction invitation information, a state of the participation option is a selectable state; or
the interaction participation information includes operation completion information, where the operation completion information is used to prompt that the preset processing operation on the object to be displayed has been performed successfully; and the operation completion information includes first sub-operation completion information and/or second sub-operation completion information, where a display position of the first sub-operation completion information is between a comment summary area and a live comment area, and the first sub-operation completion information includes the participation option in a non-selectable state; and the second sub-operation completion information is displayed in the live comment area in the form of live comments.

Further, the preset processing operation is a voting operation, the interaction participation information includes operation completion information, and the interaction invitation information includes identification information of at least two target objects to be displayed and participation options for the target objects to be displayed, and in the interaction invitation information, a state of each of the participation options is a selectable state; or
the interaction participation information includes operation completion information, where the operation completion information is used to prompt that the preset processing operation on the object to be displayed has been performed successfully; and the operation completion information includes first sub-operation completion information and/or second sub-operation completion information, where a display position of the first sub-operation completion information is between a comment summary area and a live comment area, and the first sub-operation completion information includes voting result information up to a current moment; and the second sub-operation completion information is displayed in the live comment area in the form of live comments.

Further, the interaction participation information includes state change information, where the state change information is used to prompt a state change of the target object to be displayed after preset processing is performed on the object to be displayed; the state change information includes first sub-state change information and/or second sub-state change information; a display position of the first sub-state change information is between a comment summary area and a live comment area; and a display position of the second sub-state change information is within the live comment area; and
in response to the state change information including the first sub-state change information, the apparatus further includes a fourth display module configured to:
display an object aggregation display page in response to a trigger operation on the first sub-state change information, where on the object aggregation display page, summary information of the target object to be displayed is located in a primary display position of the object aggregation display page.

Further, the second display module is configured to display the interaction invitation information and countdown information on the feed page; and
the apparatus further includes a third display module configured to:
after a countdown ends, displaying invitation and participation aggregation information on the feed page, where the invitation and participation aggregation information is used to prompt a number of users that perform the preset processing operation on the object to be displayed.

Further, the preset processing operation includes at least one of:
a listing request operation, a demonstration request operation, a voting operation to an object to be displayed, and a restocking request operation.

The interaction apparatus provided in this embodiment of the present disclosure can perform the steps of the interaction method provided in the method embodiment of the present disclosure, which are performed by the client, and has execution steps and beneficial effects. Details are not described herein again.

Compared with the prior art, the technical solutions provided in the embodiments of the present disclosure have the following advantages.

In the technical solutions provided by the embodiments of the present disclosure, the interaction invitation information is displayed on the feed page if the page association information of the feed page meets the preset trigger condition, where the interaction invitation information is used to invite users to perform a preset processing operation on the object to be displayed; and the preset processing operation is an operation used for reflecting interest in the object to be displayed; and the interaction participation information is displayed on the feed page in response to the trigger operation on the interaction invitation information, where the interaction participation information is the operation result feedback information for the preset processing operation performed on the object to be displayed. Its essence is to invite users to interact, which can not only create a lively atmosphere in the live streaming room, but also help the streamer to understand which objects to be displayed viewers are interested in and then to decide whether or when to list, demonstrate, or restock the objects to be displayed, thereby dynamically adjusting the live streaming process to improve the viewer experience.

FIG. 15 is a schematic structural diagram of an electronic device according to an embodiment of the present disclosure. Reference is made specifically to FIG. 15 below, which is a schematic structural diagram of an electronic device 1000 suitable for implementing the embodiments of the present disclosure. The electronic device 1000 in this embodiment of the present disclosure may include, but is not limited to, a mobile terminal such as a mobile phone, a notebook computer, a digital broadcast receiver, a personal digital assistant (PDA), a tablet computer (PAD), a portable multimedia player (PMP), a vehicle-mounted terminal (such as a vehicle navigation terminal), and a wearable electronic device, and a fixed terminal such as a digital TV, a desktop computer, and a smart home device. The electronic device shown in FIG. 15 is merely an example, and shall not impose any limitation on the function and scope of use of the embodiments of the present disclosure.

As shown in FIG. 15, the electronic device 1000 may include a processing apparatus (such as a central processing unit or a graphics processing unit) 1001 that may perform a variety of appropriate actions and processing in accordance with a program stored in a read-only memory (ROM) 1002 or a program loaded from a storage apparatus 1008 into a random-access memory (RAM) 1003 to implement the interaction method according to the embodiments of the present disclosure. The RAM 1003 further stores various programs and information required for the operation of the electronic device 1000. The processing apparatus 1001, the ROM 1002, and the RAM 1003 are connected to one another through a bus 1004. An input/output (I/O) interface 1005 is also connected to the bus 1004.

Generally, the following apparatuses may be connected to the I/O interface 1005: an input apparatus 1006 including, for example, a touchscreen, a touchpad, a keyboard, a mouse, a camera, a microphone, an accelerometer, and a gyroscope; an output apparatus 1007 including, for example, a liquid crystal display (LCD), a speaker, and a vibrator; the storage apparatus 1008 including, for example, a magnetic tape and a hard disk; and a communication apparatus 1009. The communication apparatus 1009 may allow the electronic device 1000 to perform wireless or wired communication with other devices to exchange information. Although FIG. 15 shows the electronic device 1000 having various apparatuses, it should be understood that it is not required to implement or have all of the shown apparatuses. More or fewer apparatuses may alternatively be implemented or provided.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart, to implement the interaction method described above. In such an embodiment, the computer program may be downloaded and installed from a network through the communication apparatus 1009, installed from the storage apparatus 1008, or installed from the ROM 1002. When the computer program is executed by the processing apparatus 1001, the above-mentioned functions defined in the method of the embodiments of the present disclosure are performed.

It should be noted that the computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include an information signal propagated in a baseband or as a part of a carrier, in which a computer-readable program code is carried. The propagated information signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, the client and the server may communicate using any known or future-developed network protocol such as the Hypertext Transfer Protocol (HTTP), and may be connected to digital information communication (for example, communication network) in any form or medium. Examples of the communication network include a local area network ("LAN"), a wide area network ("WAN"), an internetwork (for example, the Internet), a peer-to-peer network (for example, an ad hoc peer-to-peer network), and any known or future-developed network.

The computer-readable medium may be contained in the electronic device. Alternatively, the computer-readable medium may exist independently, without being assembled into the electronic device.

The computer-readable medium carries one or more programs that, when executed by the electronic device, cause the electronic device to:
display a feed page, where the feed page corresponds to an object to be displayed;
display interaction invitation information on the feed page when page association information of the feed page meets a preset trigger condition, where the interaction invitation information is used to invite users to perform a preset processing operation on the object to be displayed; and the preset processing operation is an operation used for reflecting interest in the object to be displayed; and
display interaction participation information on the feed page in response to a trigger operation on the interaction invitation information, where the interaction participation information is operation result feedback information for the preset processing operation performed on the object to be displayed.

Optionally, when the one or more programs are executed by the electronic device, the electronic device may also perform other steps described in the above-mentioned embodiments.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a unit does not constitute a limitation on the unit itself under certain circumstances.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, the present disclosure provides an electronic device. The electronic device includes:
one or more processors; and
a memory configured to store one or more programs, where
the one or more programs, when executed by the one or more processors, cause the one or more processors to implement the interaction method according to the present disclosure.

According to one or more embodiments of the present disclosure, the present disclosure provides a computer-readable storage medium having a computer program stored thereon, where the program, when executed by a processor, causes any one of the interaction methods provided in the present disclosure to be implemented.

An embodiment of the present disclosure further provides a computer program product, including a computer program or instruction that, when executed by a processor, causes the interaction method described above to be implemented.

It should be noted that the relational terms such as "first" and "second" herein are only used to distinguish one entity or operation from another, and do not necessarily require or imply that any actual relationship or sequence exists between these entities or operations. Moreover, the terms "include", "including", "comprise" and "comprising", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The above-mentioned description illustrates merely specific implementations of the present disclosure, so that those skilled in the art can understand or implement the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments described herein, but extends to the widest scope that complies with the principles and novelty disclosed in this specification.

## Claims

1. An interaction method, comprising:
displaying a feed page, wherein the feed page corresponds to an object to be displayed;
displaying interaction invitation information on the feed page when page association information of the feed page meets a preset trigger condition, wherein the interaction invitation information is used to invite users to perform a preset processing operation on the object to be displayed, and the preset processing operation is an operation used for reflecting interest in the object to be displayed; and
displaying interaction participation information on the feed page in response to a trigger operation on the interaction invitation information, wherein the interaction participation information is operation result feedback information for the preset processing operation performed on the object to be displayed.

2. The method according to claim 1, further comprising:
the feed page further comprising a comment summary area and a live comment area, wherein the comment summary area and the live comment area are vertically arranged, with the live comment area being located above the comment summary area;
a display position of the interaction invitation information being between the comment summary area and the live comment area; and
a display position of the interaction participation information being at least one of the following positions: being within the live comment area, and being between the comment summary area and the live comment area.

3. The method according to claim 1, wherein the feed page corresponds to at least one object to be displayed; the interaction invitation information does not comprise identification information of any of the at least one object to be displayed, and the displaying interaction participation information on the feed page in response to a trigger operation on the interaction invitation information comprises:
displaying an object aggregation display page in response to the trigger operation on the interaction invitation information, wherein the object aggregation display page comprises summary information of all objects to be displayed that correspond to the feed page; and
displaying the interaction participation information on the feed page in response to a selection operation on one of the objects to be displayed, wherein the interaction participation information comprises identification information of a target object to be displayed, and the target object to be displayed is the selected object to be displayed.

4. The method according to claim 1, wherein the feed page corresponds to at least one object to be displayed; the at least one object to be displayed comprises a target object to be displayed; the interaction invitation information comprises identification information of the target object to be displayed and a participation option; and the displaying interaction participation information on the feed page in response to a trigger operation on the interaction invitation information comprises:
displaying the interaction participation information on the feed page in response to a selection operation on the participation option, wherein the interaction participation information comprises the identification information of the target object to be displayed.

5. The method according to claim 4, wherein the interaction participation information comprises operation completion information, and states of the participation option comprise a selectable state and a non-selectable state; and in the interaction invitation information, a state of the participation option is a selectable state; or
the interaction participation information comprises operation completion information, wherein the operation completion information is used to prompt that the preset processing operation on the object to be displayed has been performed successfully; and the operation completion information comprises first sub-operation completion information and/or second sub-operation completion information, wherein a display position of the first sub-operation completion information is between a comment summary area and a live comment area, and the first sub-operation completion information comprises the participation option in a non-selectable state; and the second sub-operation completion information is displayed in the live comment area in the form of live comments.

6. The method according to claim 4, wherein the preset processing operation is a voting operation, the interaction participation information comprises operation completion information, and the interaction invitation information comprises identification information of at least two target objects to be displayed and participation options for the target objects to be displayed; and in the interaction invitation information, a state of each of the participation options is a selectable state; or
the interaction participation information comprises operation completion information, wherein the operation completion information is used to prompt that the preset processing operation on the object to be displayed has been performed successfully; and the operation completion information comprises first sub-operation completion information and/or second sub-operation completion information, wherein a display position of the first sub-operation completion information is between a comment summary area and a live comment area, and the first sub-operation completion information comprises voting result information up to a current moment; and the second sub-operation completion information is displayed in the live comment area in the form of live comments.

7. The method according to claim 3 or 4, wherein the interaction participation information comprises state change information, wherein the state change information is used to prompt a state change of the target object to be displayed after preset processing is performed on the object to be displayed; the state change information comprises first sub-state change information and/or second sub-state change information; a display position of the first sub-state change information is between a comment summary area and a live comment area; and a display position of the second sub-state change information is within the live comment area; and
in response to the state change information comprising the first sub-state change information, the method further comprises:
displaying an object aggregation display page in response to a trigger operation on the first sub-state change information, wherein on the object aggregation display page, summary information of the target object to be displayed is located in a primary display position of the object aggregation display page.

8. The method according to claim 1, wherein displaying interaction invitation information on the feed page comprises:
displaying the interaction invitation information and countdown information on the feed page; and
after a countdown ends, displaying invitation and participation aggregation information on the feed page, wherein the invitation and participation aggregation information is used to prompt the number of users that perform the preset processing operation on the object to be displayed.

9. The method according to claim 1, wherein the preset processing operation comprises at least one of:
a listing request operation, a demonstration request operation, a voting operation to an object to be displayed, and a restocking request operation.

10. An interaction apparatus, comprising:
a first display module configured to display a feed page, wherein the feed page corresponds to an object to be displayed;
a second display module configured to display interaction invitation information on the feed page when page association information of the feed page meets a preset trigger condition, wherein the interaction invitation information is used to invite users to perform a preset processing operation on the object to be displayed, and the preset processing operation is an operation used for reflecting interest in the object to be displayed; and
a third display module configured to display interaction participation information on the feed page in response to a trigger operation on the interaction invitation information, wherein the interaction participation information is operation result feedback information for the preset processing operation performed on the object to be displayed.

11. An electronic device, comprising:
one or more processors; and
a storage apparatus configured to store one or more programs, wherein
the one or more programs, when executed by the one or more processors, cause the one or more processors to implement the method according to any one of claims 1 to 9.

12. A computer-readable storage medium having a computer program stored thereon, wherein the program, when executed by a processor, causes the method according to any one of claims 1 to 9 to be implemented.
